Europäisches Patentamt

European Patent Office

Office européen des brevets

(11) Publication number : **0 434 124 B1**

(12) **EUROPEAN PATENT SPECIFICATION**

(45) Date of publication of patent specification :
04.08.93 Bulletin 93/31

(51) Int. Cl.⁵ : **B01J 19/18,** B01F 7/26,
C08G 59/00

(21) Application number : **90203264.8**

(22) Date of filing : **11.12.90**

(54) **Multistage reactor.**

(30) Priority : **15.12.89 GB 8928388**

(43) Date of publication of application :
26.06.91 Bulletin 91/26

(45) Publication of the grant of the patent :
04.08.93 Bulletin 93/31

(84) Designated Contracting States :
AT BE CH DE ES FR GB IT LI NL SE

(56) References cited :
GB-A- 2 108 407
NL-A- 279 114
US-A- 4 065 105

(73) Proprietor : SHELL INTERNATIONALE
RESEARCH MAATSCHAPPIJ B.V.
Carel van Bylandtlaan 30
NL-2596 HR Den Haag (NL)

(72) Inventor : Buurman, Cornelis
Badhuisweg 3
NL-1031 CM Amsterdam (NL)
Inventor : Garnier, Christian Nicolaas
Badhuisweg 3
NL-1031 CM Amsterdam (NL)

## Description

This invention is concerned with a multistage reactor and more particularly, with the use thereof for the continuous advancing of epoxy resins.

Advancing, sometimes referred to as fusing, of epoxy resins is known to comprise the reaction of diglycidylether resins with dihydric phenols to produce higher molecular weight monoepoxides, diepoxides or polyether resins depending upon molar ratio employed in the reaction. This reaction is currently often employed by resin end-users who make their own solid epoxy resins by advancing liquid epoxy resins such as the diglycidyl ether of bisphenol-A. The process they commonly use is a batch process in large kettles. Disadvantages of such batch processing are the obtaining of inconsistent product quality and the problem to achieve adequate temperature control whilst avoiding hot spots in the kettle, during the batch process.

The problems of consistent quality and improved temperature control could in principle be overcome by processing in a continuous stirred tank reactor allowing for continuous supply of reactants and continuous take-off of product. However, this would generate an additional problem because the relatively large back-mixing effects that are inherent to such continuous processing would cause a product to be formed with a much wider molecular weight distribution (MWD).

It has been proposed in EP-A-193,809 to implement the continuous advancing process in an extruder, however, extruders have poor mixing efficiency, limited possibilities for adequate temperature control, and relatively short lengths. The latter necessitates the use of elevated reaction temperatures to overcome the restricted residence times inherent to the short lengths of the extruders. As a result the advanced resins will not have onsistent product quality and their molecular weight distribution will once again be fairly wide. Alternative proposals for continuous advancing are found in US-A-3,919,169 and US-A-4,105,634, which are based on the use of pipe-line reactors. The latter reference does not show any MWD below the ratio of 1.6, typical values are 1.7 to 1.9. In the former reference no MWD data have been disclosed, the laboratory experiment included therein refers to use of a 110 m long, narrow pipe, conversion of that pipe length to the size desirable for commercial large scale epoxy resin advancing plants would necessitate pipe-lengths of at least 500 m. Likewise, for obtaining the MWD ratios above 1.6 as disclosed in US-A-4,105,634 a pipe of at least 750 m long would be required. Such excessive lengths need additional mechanical means to overcome the excessively large pressure drop.

Thus, there is a need for providing a continuous epoxy resin advancing process that can produce final products that have both a relatively narrow MWD and a consistent quality. In this description the MWD of the desired advanced resin is defined relative to that of the MWD of a similar advanced resin obtainable by batch processing and "relatively narrow" stands for "essentially approaching the MWD of equivalent batch products". Studies by the Applicants have shown that in order to solve that problem a new reactor design is called for.

Thereto this invention provides a novel multistage reactor comprising a cylindrical housing provided with inlet and outlet openings for cocurrent flow of liquid reactants and product, a series of stator rings mounted on the internal wall of the housing, a series of rotor rings mounted on a central rotatable shaft, each internal volume between successive rings defining one stage, the stator rings radially overlapping the rotor rings such that relatively narrow slits remain between the rotor rings and the inner wall of the housing and between the stator rings and the outer wall of the central shaft, said slits having a length (L) to width (W) ratio of from 3 to 12, the distance in axial direction between the stator and the rotor rings being larger than W.

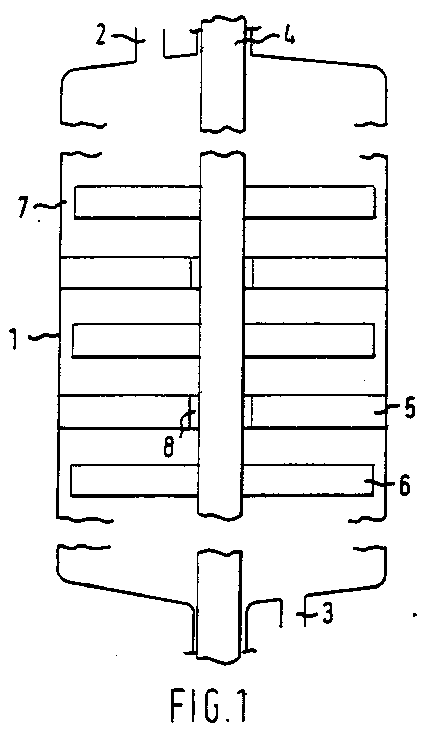

Fig. 1 shows a schematic longitudinal cross-section of the novel multistage reactor. Herein a part of the cylindrical housing (1) is shown. An inlet opening (2) is provided through which a mixture of liquid reactants is supplied to the internal volume of the reactor. When the reactor is mounted vertically, liquid reaction mixture flows downwardly by gravity or by external pumping means (not shown). Reaction product is taken-off via an outlet opening (3). A central rotatable shaft (4) is connected to driving means (not shown). Appropriate sealing means are provided where the shaft penetrates the housing of the reactor. Stator rings (5) are mounted on the housing and rotor rings (6) are mounted on the rotatable shaft.

In the radial direction the stator rings and the rotor rings substantially overlap thus leaving narrow annular slits 7 and 8 between the outer periphery of the rotor rings and the inner wall of the housing, respectively between the inner periphery of the stator rings and the outer wall of the rotatable shaft. Each of these slits has a certain length (L) in the axial direction and a certain width (W) in the radial direction. L and W are subdivided into L1 and W1 for slits 7 and L2 and W2 for slits 8. In this invention it is essential that each of the ratio L1/W1 and L2/W2 should be selected within the range of from 3 to 12. The preferred ratio is from 3.3 to 8.

The distance in axial direction between the stator rings and the rotor rings should be larger than W. The consequence thereof is that each of the aforesaid slits, through which liquid reactants flow into the next stage of the reactor, is narrower than the passage remaining between the rings defining the stages. Thus an area of restricted flow is created in the slits wherein the liquid reactants have an increased vertical flow rate in re-

EP 0 434 124 B1

spect of the substantially horizontal flow in the stages. This restriction together with the required minimum length over width ratio of each restricted flow zone substantially avoids the occurrence of back-mixing from one stage into the previous one and the total residence time of the reactants in the reactor becomes very close to being homogeneous.

The stator and rotor rings will normally be constructed in the form of circular flat discs with a thickness corresponding with L2, respectively L1. When the discs are provided with a hollow internal space one may benefit thereof by employing such hollow internals for circulating a cooling or heating medium, for example in the way as has been disclosed in EP-A-105,436.

It is also possible to conceive discs with slanted top and bottom sides, so as to enhance draining-off of liquid reactants and/or product when emptying the reactor, or filling it from the top.

Because of the rotation of the rotor rings, shear zones are formed in the proximities of the top and bottom parts of the rotor rings. By maintaining relatively narrow horizontal flow zones in between the rotor rings and the stator rings, it is possible to adopt a design wherein a relatively large proportion of the volume of each stage is a zone of high shear. This improves the mixing efficiency in each stage and by repeating this principle for every stage one arrives at a reactor of outstanding mixing efficiency.

Preferred reactors for the envisaged epoxy resin advancing are those comprising of from 12 to 60 stages. When the positioning of a vertical reactor with 60 stages would be less attractive one can of course employ two reactors in succession each of these having 30 stages. 20 to 35 stages per reactor are even more preferred. Preferred internal volumes per stage will vary at levels of from 10 to 1000 l, depending on the throughput.

Preferred lengths L1, L2 and widths W1, W2 are selected from the ranges of from 0.02 to 0.15 m, respectively from 0.02 to 0.05 m. It is preferred, for reasons of pressure drop, to choose W1, W2, L1, L2 such that the annular flow areas are substantially equal.

Optional features that can be incorporated into the design of the reactor are scraper blades or hooks of the type disclosed in EP-A-105,436. These devices can be mounted in fixed positions on the cylindrical housing, on the stator rings, on the rotor rings or on the central rotatable shaft. The scraping action may be directed at the top and bottom sides of the stator and rotor rings, at the outer wall of the rotatable shaft or at the inner wall of the housing, this will as a general rule determine the type of scraping or wiping means and its way of positioning in the reactor one may wish to elect. The reactor may also be provided with means for injecting additional reaction components.

It will be appreciated that the use of the reactor according to the invention is not restricted to advancing of epoxy resins. For example the reactor could be successfully applied in other polymerization processes.

The overall chemistry and the process parameters for advancing epoxy resins in the novel reactor are in principle not different from those known in the art, c.f. the literature references quoted above. There is ample choice of known catalysts, reaction temperatures and exotherms, molar ratios of reactants, period of reaction, as well as desirable molecular weights of the advanced final products. Thanks to the improved homogeneity of the residence time of the mixture in the novel reactor of this invention one can achieve an excellent molecular weight distribution and product qualities of a consistency not known before.

In the Examples MWD' stands for $\dfrac{MWD_{continuous}}{MWD_{batch}}$ the $MWD_{batch}$ concerning the production of the same EPIKOTE type of product with the same reactants and the same temperature. The MWD data are calculated from the weight average molecular weight and the number average molecular weight $(\dfrac{MW_w}{MW_n})$ as determined by GPC analysis.

## EXAMPLES

Several EPIKOTE-types of product were prepared with a continuous processing reactor according to the invention, broadly characterized by the following data

3

| | | |
|---|---|---|
| Free Reactor volume | 3.19 | $m^3$ |
| Total Reactor volume | 6.64 | $m^3$ |
| Internal Diameter | 1.2 | m |
| Rotor Disc diameter | 1.17 | m |
| Stator Opening diameter | 0.49 | m |
| Shaft Diameter | 0.44 | m |
| Stage volume | 0.133 | $m^3$ |
| Stage height | 0.136 | m |
| Rotation speed | 0.40 | $r.s^{-1}$ |
| Number of stages | 24 | |
| Slit width W1 | 0.016 | m |
| W2 | 0.027 | m |
| Slit length L1 | 0.06 | m |
| L2 | 0.1 | m |

two of such reactors were employed in series. The following advancing processes were performed

a) An EPIKOTE-3001 (EPIKOTE is a Shell tradename) type of product was prepared by charging the first reactor with EPIXOTE 828 (5370-5410 mmol/kg) and 2,2-di(4-hydroxyphenyl)propane (DPP) in a weight ratio of 3.41:1 in the presence of 300 ppm ethyltriphenylphosphonium (ETPPI) catalyst. The feedstock was preheated to 135 °C. By properly adjusting the coolant rate the reaction mixture was allowed to reach a maximum temperature of 165 °C. Intake flow rate was 0.063 kg/min. The residence time in the two reactors taken together was 135 minutes. An EPIKOTE-3001 product having an Epoxy Group Content (EGC) of 2140 mmol/kg and a phenolic OH content of less than 1 mmol/kg and having a MWD' of 1.03 was produced.

b) An EPIKOTE-3003 type of product was prepared by charging the reactor with EPIKOTE-828 and DPP in weight ratio of 2.55:1 and 300 ppm of ETPPI. The feedstock was preheated to 135 °C, the intake flow rate was 0.063 kg/min and the total residence time was 135 minutes. During the reaction the mixture was allowed to reach a temperature of 175 °C. The resulting product had an EGC of 1355 mmol/kg, a phenolic OH content of less than 4 mmol/kg and a MWD' of 1.04.

c) An EPIKOTE-1008 type of product was prepared by charging the reactor with EPIKOTE-1001 (dried, EGC of 2120 mmol/kg) and DPP in a weight ratio of 5.44 and 500 ppm of ETPPI. The feedstock was preheated to a temperature of 135 °C, the intake flow rate was 0.063 kg/min and the total residence time was 135 minutes. During the reaction the mixture was allowed to reach a temperature of 170 °C. The resulting product had an EGC of 405 mmol/kg, a phenolic OH content of less than 15 mmol/kg and a MWD' of 1.02.

d) An EPIKOTE-1008 type of product was prepared by charging the reactor with EPIKOTE-1001 and DPP in a weight ratio of 5.52 and 180 ppm trimethylammoniumchloride (TMAC) catalyst. The feedstock was preheated to 136 °C, the intake flow rate was 0.063 kg/min and the total residence time was 135 minutes. During the reaction the mixture was allowed to reach a temperature of 178 °C. The resulting product had en EGC of 405 mmol/kg, a phenolic OH content of less than 7 mmol/kg and MWD' of 1.01.

e) An EPIKOTE-1010 type of product was prepared by charging the reactor with EPIKOTE-828 and DPP in a weight ratio of 1.89 and 400 ppm of TMAC. The feedstock was preheated to 115 °C, the intake flow rate was 0.063 kg/min and the total residence time was 210 minutes. During the reaction the mixture was allowed to reach a temperature of 184 °C. The resulting product had an EGC of 335 mmol/kg, a phenolic OH content of less than 5 and a MWD' of 1.00.

## Claims

1. A multistage reactor comprising a cylindrical housing provided with inlet and outlet openings for cocurrent flow of liquid reactants and product, a series of stator rings mounted on the internal wall of the housing, a series of rotor rings mounted on a central rotatable shaft, each internal volume between successive rings defining one stage, the stator rings radially overlapping the rotor rings such that relatively narrow slits remain between the rotor rings and the inner wall of the housing and between the stator rings and the outer wall of the central shaft, said slits having a length (L) to width (W) ratio of from 3 to 12, the distance in axial direction between the stator and the rotor rings being larger than W.

2. A reactor as claimed in claim 1, in which the ratio L:W is from 3.3 to 8.

3. A reactor as claimed in claim 1 or 2, in which the internal volume of each stage is from 10 to 1000 l.

4. A reactor as claimed in any one of claims 1 to 3, in which the number of stages is in between 12 and 60.

5. A reactor as claimed in any one of claims 1 to 4, in which L is from 0.02 to 0.15 m.

6. A reactor as claimed in any one of claims 1 to 5, in which the distance between the stator rings and the rotor rings in axial direction is at least 4W.

7. A continuous process for the preparation of a polymeric compound using a reactor as claimed in any one of the claims 1-6.

8. A process for advancing an epoxy compound in continuous reaction in a reactor as claimed in any one of the claims 1-6.

## Patentansprüche

1. Mehrstufiger Reaktor, mit einem zylindrischen Gehäuse, das mit Einlaß- und Auslaßöffnungen für den Gleichstrom von flüssigen Reaktanden und Produkten, einer Reihe von an der Innenwand des Gehäuses montierten Statorringen und einer Reihe von auf einer zentralen drehbaren Welle montierten Rotorringen versehen ist, wobei jedes Innenvolumen zwischen aufeinanderfolgenden Ringen eine Stufe definiert, die Statorringe die Rotorringe radial so überlappen, daß verhältnismäßig schmale Schlitze zwischen den Rotorringen und der Innenwand des Gehäuses und zwischen den Statorringen und der Außenwand der zentralen Welle freibleiben, diese Schlitze ein Längen(L)-zu-Breiten-(W)-Verhältnis von 3 bis 12 haben und der Abstand in axialer Richtung zwischen den Stator- und den Rotorringen größer als W ist.

2. Reaktor nach Anspruch 1, bei welchem das Verhältnis L:W zwischen 3,3 und 8 beträgt.

3. Reaktor nach Anspruch 1 oder 2, bei welchem das Innenvolumen jeder Stufe zwischen 10 und 1000 l beträgt.

4. Reaktor nach einem der Ansprüche 1 bis 3, bei welchem die Anzahl von Stufen zwischen 12 und 60 beträgt.

5. Reaktor nach einem der Ansprüche 1 bis 4, bei welchem L zwischen 0,02 und 0,15 m beträgt.

6. Reaktor nach einem der Ansprüche 1 bis 5, bei welchem der Abstand zwischen den Statorringen und den Rotorringen in axialer Richtung zumindest 4W beträgt.

7. Kontinuierliches Verfahren zur Herstellung einer polymeren Verbindung unter Verwendung eines Reaktors nach einem der Ansprüche 1-6.

8. Verfahren zum Eindicken einer Epoxidverbindung in einer kontinuierlichen Reaktion in einem Reaktor nach einem der Ansprüche 1-6.

## Revendications

1. Un réacteur à plusieurs étages comportant un carter cylindrique pourvu d'ouvertures d'entrée et de sortie pour un écoulement co-courant de réactifs et de produits liquides, une série d'anneaux statiques étant montés sur la paroi latérale du carter, tandis qu'une série d'anneaux pivotant étant montés sur un arbre central, susceptible d'être entraîné en rotation, chaque volume interne entre les anneaux successifs délimitant un étage, les anneaux statiques surplombant radialement les anneaux pivotants de sorte que des fentes relativement étroites sont ménagées entre les anneaux pivotants et la paroi interne du carter et entre les anneaux statistiques et la paroi externe de l'arbre central, lesdites fentes présentant un rapport entre leur longueur (L) et leur largeur (W) de 3 à 12, la distance dans la direction axiale entre les anneaux statiques et pivotants étant plus grande que W.

2. Un réacteur tel que revendiqué dans la revendication 1, dans lequel le rapport L:W est de 3,3 à 8.

3. Un réacteur tel que revendiqué dans la revendication 1, dans lequel le volume interne de chaque étage est de 10 à 1000 l.

4. Un réacteur tel que revendiqué dans l'une quelconque des revendications 1 à 3, dans lequel le nombre d'étages se situe entre 12 et 60.

5. Un réacteur tel que revendiqué dans l'une quelconque des revendications 1 à 4, dans lequel L est de 0,02 à 0,15 m.

6. Un réacteur tel que revendiqué dans l'une quelconque des revendications 1 à 6, dans lequel la distance entre les anneaux statiques et les anneaux de rotor dans la direction axiale est d'au moins 4W.

7. Un procédé en continu pour la préparation d'un composé polymère, mettant en oeuvre un réacteur tel que revendiqué dans l'une quelconque des revendications 1 à 6.

8. Un procédé pour la finition d'un composé époxy par une réaction en continu dans un réacteur tel que revendiqué dans l'une quelconque des revendications 1 à 6.

FIG.1